# EUROPEAN PATENT APPLICATION

(11) **EP 4 434 947 A1**
(43) Date of publication of application: **25.09.2024**
(21) Application number: 23743402.2
(22) Date of filing: 10.01.2023
(51) Int. Cl.: C03C 10/00, C03C 17/23, C03C 17/245, C03C 17/25, C03B 32/02, F24C 15/10, H05B 6/12, C03C 4/00

(54) **CERAMIC GLASS AND COOKTOP USING SAME**

(30) Priority: 18.01.2022 KR 20220007488; 27.01.2022 KR 20220012690; 04.07.2022 KR 20220082149; 22.07.2022 KR 20220091365; 22.07.2022 KR 20220091371
(71) Applicant: Samsung Electronics Co., Ltd., Suwon-si, Gyeonggi-do 16677 (KR)
(72) Inventor: SONG, Jiyoung, Suwon-si, Gyeonggi-do 16677 (KR); KIM, Hyungin, Suwon-si, Gyeonggi-do 16677 (KR); KOH, Youngdeog, Suwon-si, Gyeonggi-do 16677 (KR); KIM, Kwangjoo, Suwon-si, Gyeonggi-do 16677 (KR); MOK, Junesang, Suwon-si, Gyeonggi-do 16677 (KR); HA, Jonghun, Suwon-si, Gyeonggi-do 16677 (KR)
(74) Representative: Gulde & Partner
(86) International application number: PCT/KR2023/000441
(87) International publication number: WO 2023/140554

(57) **Abstract**

A ceramic glass for cooktop includes a glass material having an uneven layer formed on an upper surface of the glass material. A color difference meter value L of the ceramic glass ranges from 90 to 100. The glass material includes Li₂O, Al₂O₃, and SiO₂. A heat shock temperature of the ceramic glass ranges from 525 °C to 575 °C. The ceramic glass implements a surface roughness Ra of 0.1 *µ*m or less and surface roughness Rz of 0.8 *µ*m or less through a polishing operation.

## Description

### [Technical Field]

The disclosure relates to a ceramic glass and a cooktop using the same, and more particularly, to a ceramic glass for raising color clarity by controlling a microstructure and enabling easy cleaning through a polishing process, and a cooktop using the ceramic glass.

### [Background Art]

As a heating source for generating heat, an induction apparatus (e.g., induction heating apparatus) may be used. Particularly, as a cooking appliance for heating food by using the induction apparatus, a cooktop (or a hob) may be used.

In general, the top of the cooktop is made of a ceramic glass having heat resistance properties. The ceramic glass is relatively safe against a heat shock fracture, and has high mechanical strength and heat conductivity.

The ceramic glass may be classified into a white ceramic glass, a black ceramic glass, and a transparent ceramic glass according to one or more colors of the ceramic glass. The white ceramic glass may have lower aesthetic appeal than the black ceramic glass and transparent ceramic glass.

The ceramic glass manufacturing process includes a crystallization operation and a cooling operation. However, a manufacturing process to improve the aesthetic appeal of the white ceramic glass increases the time for the crystallization operation and cooling speed in the cooling operation, resulting in generation of many surface protrusions and depressions, which makes cleaning of the ceramic glass more difficult.

### [Disclosure]

### [Technical Problem]

Provided are a ceramic glass for raising color clarity by controlling a microstructure and enabling easy cleaning through a polishing process, and a cooktop using the ceramic glass.

### [Technical Solution]

According to an aspect of the disclosure, a ceramic glass for cooktop includes a glass material having an uneven layer formed on an upper surface of the glass material. A color difference meter value L of the ceramic glass ranges from 90 to 100. The glass material includes Li₂O, Al₂O₃, and SiO₂. A heat shock temperature of the ceramic glass ranges from 525 °C to 575 °C. The ceramic glass implements a surface roughness Ra of 0.1 µm or less and surface roughness Rz of 0.8 µm or less through a polishing operation.

The ceramic glass according to one or more embodiments of the present invention may comprise a glass material having an even layer formed on an upper surface, and a color difference meter value L from 85 and to 100. Preferably, the color difference meter value L may be from 90 to 100.

The ceramic glass may further include a coating layer applied on an entire of the uneven layer, wherein the coating layer may include ZrO₂ and TiO₂.

The glass material may include Li₂O of 5 percent by weight (wt%) to 15 wt%, Al₂O₃ of 15 wt% to 25 wt%, SiO₂, and impurities.

A thickness of the glass material may range from 3 mm to 5 mm.

The coating layer may include ZrO₂ of 70 percent by weight (wt%) to 95 wt%, TiO₂.

A thickness of the coating layer may be 400 nm or less.

A Vickers hardness (Hv) of the ceramic glass may range from 920 to 1000.

A heat resistance temperature of the ceramic glass may range from 825 °C to 875 °C.

The ceramic glass may further include a heating area guide configured to display a center of a heating area on an upper side of the glass material.

According to an aspect of the disclosure, a method for manufacturing a ceramic glass, includes: producing a ceramic glass precursor; generating crystals by heating the ceramic glass precursor; cooling a ceramic glass including the crystals; molding the cooled ceramic glass; and polishing the molded ceramic glass.

The method for manufacturing the ceramic glass may further include coating the polished ceramic glass.

The producing of the ceramic glass precursor may include melting ceramic glass powder at 1400 °C to 1600 °C, and after the melting is performed, cooling the ceramic glass at a cooling speed of 40 °C/min until the ceramic glass reaches room temperature.

The generating of the crystals may include a first heating operation of maintaining the ceramic glass precursor at 600 °C to 800 °C for 10 minutes to 20 minutes, and a second heating operation of maintaining the ceramic glass precursor at 800°C to 1000 °C for 20 minutes to 30 minutes.

The cooling operation may include cooling the ceramic glass including the crystals at cooling speed of 20 °C/min or more until the ceramic glass reaches room temperature.

The coating of the polished ceramic glass may include applying a coating solution on an upper surface of the ceramic glass, and after the coating solution is applied, drying the coating solution at 600 °C to 800 °C for 5 minutes to 15 minutes.

According to an aspect of the disclosure, a cooktop includes a cooktop body; a first glass provided on an upper side of the cooktop body; a second glass positioned on a same line as the first glass; a coupling device configured to detachably couple the second glass to the first glass; a circuit board positioned below the second glass; and a coil resting plate positioned below a heater, wherein the heater is rested on the coil resting plate. The cooktop body includes the heater, the first glass includes a ceramic glass, the ceramic glass includes a glass material, wherein an uneven layer is formed on an upper surface of the glass material, a color difference meter value L of the ceramic glass ranges from 90 to 100, a heat shock temperature of the ceramic glass ranges from 525 °C to 575 °C, the ceramic glass implements surface roughness Ra of 0.1 µm or less and surface roughness Rz of 0.8 µm or less through a polishing operation, the glass material includes LiO₂, Al₂O₃, and SiO₂.

The heat resistance temperature of the ceramic glass may range from 825 °C to 875 °C.

The glass material may include Li₂O of 5 percent by weight (wt%) to 15 wt%, Al₂O₃ of 15 wt% to 25 wt%, SiO₂.

According to an aspect of the disclosure cooktop includes: a cooktop body; a first glass provided on an upper side of the cooktop body; a second glass positioned on a same line as the first glass; a coupling device configured to detachably couple the second glass to the first glass; a circuit board positioned below the second glass; and a coil resting plate positioned below a heater, wherein the heater is rested on the coil resting plate. The cooktop body includes the heater, the first glass includes a ceramic glass, the ceramic glass includes a glass material, wherein an uneven layer is formed on an upper surface of the ceramic glass, a color difference meter value L of the ceramic glass ranges from 90 to 100, the ceramic glass implements surface roughness Ra of 0.1 *µ*m or less and surface roughness Rz of 0.8 *µ*m or less through a polishing operation, the glass material includes LiO₂, Al₂O₃, and SiO₂.

### [Advantageous Effects]

According to one or more embodiments of the disclosure, a ceramic glass for increasing time for a crystallization operation and cooling speed in a cooling operation to raise color clarity and enabling easy cleaning through a polishing process, and a cooktop using the ceramic glass may be provided.

However, effects that may be achieved by the ceramic glass according to embodiments of the disclosure and the cooktop using the ceramic glass are not limited to the above-mentioned effects, and other effects not mentioned will be clearly understood by one of ordinary skill in the technical art to which the disclosure belongs from the following descriptions.

### [Description of Drawings]

The above and other aspects, features, and advantages of certain embodiments of the present disclosure will be more apparent from the following description taken in conjunction with the accompanying drawings, in which:
FIG. 1 is a schematic diagram of a ceramic glass, according to various embodiments;
FIG. 2 is a picture obtained by magnifying and photographing a cross section of a ceramic glass, according to various embodiments, with a Transmission Electron Microscope (TEM);
FIG. 3 is a flowchart illustrating a ceramic glass manufacturing method, according to various embodiments;
FIG. 4 shows a cooktop, according to various embodiments;
FIG. 5 is an exploded perspective view of a cooktop, according to various embodiments;
FIG. 6 is a picture obtained by photographing a cooktop, according to various embodiments, after a kimchi pollution source is applied on an upper plate of the cooktop; and
FIG. 7 is a picture obtained by photographing a cooktop, according to various embodiments, after a kimchi pollution source is applied on an upper plate of the cooktop and then cleaned.

### [Best Mode]

According to an aspect of the disclosure, a ceramic glass for cooktop includes a glass material having an uneven layer formed on an upper surface of the glass material. A color difference meter value L of the ceramic glass ranges from 90 to 100. The glass material includes Li₂O, Al₂O₃, and SiO₂. A heat shock temperature of the ceramic glass ranges from 525 °C to 575 °C. The ceramic glass implements a surface roughness Ra of 0.1 *µ*m or less and surface roughness Rz of 0.8 *µ*m or less through a polishing operation.

### [Modes of the Invention]

Hereinafter, embodiments of the present disclosure will be described in detail with reference to the accompanying drawings. The following embodiments are provided to sufficiently transfer the technical concepts of the disclosure to one of ordinary skill in the art to which the disclosure belongs. However, the disclosure is not limited to these embodiments, and may be embodied in another form. In the drawings, parts that are irrelevant to the descriptions may be not shown in order to clarify the disclosure, and also, for easy understanding, the sizes of components are more or less exaggeratedly shown.

In the entire specification, it will be understood that when a certain portion "includes" a certain component, the portion does not exclude another component but can further include another component, unless the context clearly dictates otherwise.

The singular forms "a," "an," and "the" include plural referents unless the context clearly dictates otherwise.

A ceramic glass, according to one or more embodiments of the disclosure, may include a glass material. In some examples, an uneven layer may be formed on an upper surface of the glass material of the ceramic glass, and a color difference meter value L of the ceramic glass may range from 85 to 100. In some examples, the color difference meter value L may range from 90 to 100.

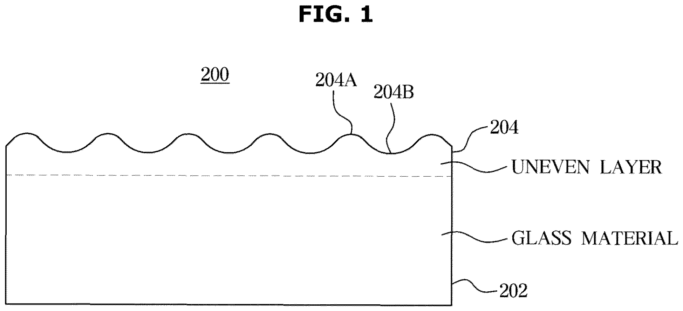

FIG. 1 is a schematic diagram of a ceramic glass 200, according to one or more embodiments of the disclosure.

Referring to FIG. 1, a ceramic glass 200, according to one or more embodiments of the disclosure, may include a glass material 202, where an uneven layer 204 may be formed on an upper surface of the glass material 202. The uneven layer may include a series of peaks 204A and valleys 204B.

A color difference meter value L of the ceramic glass, according to one or more embodiments of the disclosure may range from 85 to 100. In some examples, the color difference meter value L may range from 90 to 100.

A white ceramic glass has lower aesthetic appeal than a black ceramic glass and a transparent ceramic glass. The manufacturing process of the white ceramic glass may include a crystallization operation and a cooling operation. The embodiments of the present disclosure may advantageously control a microstructure to improve color clarity by increasing a time for the crystallization operation and increasing a cooling speed in the cooling operation to improve the aesthetic appeal of the white ceramic glass.

Thereby, the ceramic glass, according to one or more embodiments of the disclosure, may have a color difference meter value L ranging from 85 to 100, to secure high color clarity, even though the ceramic glass may be applied to a white ceramic glass.

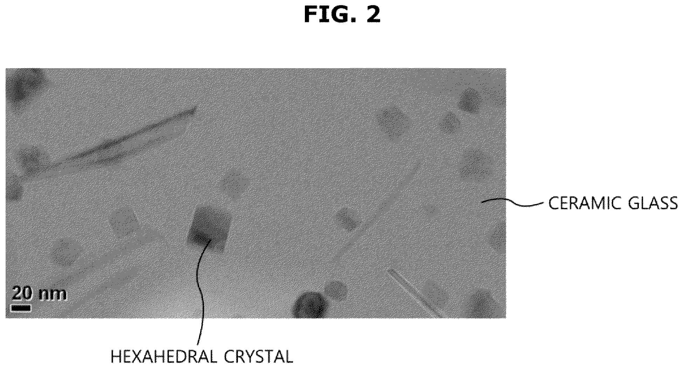

FIG. 2 is a picture obtained by magnifying and photographing a cross section of a ceramic glass, according to one or more embodiments of the disclosure, with a Transmission Electron Microscope (TEM).

Referring to FIG. 2, hexahedral crystals inside a ceramic glass are viewed as microstructures. The hexahedral crystals influence color clarity of the ceramic glass. Therefore, a size and number of the hexahedral crystals may need to be controlled to an appropriate size and number to improve the color clarity of the ceramic glass. The embodiments of the present disclosure may control the size and number of the hexahedral crystals based on a glass material of the ceramic glass as well as a manufacturing process.

The ceramic glass, according to one or more embodiments of the disclosure, may further include a coating layer that is applied on at least a portion of the uneven layer or an entirety of the uneven layer.

In some examples, the coating layer may include ZrO₂ and TiO₂.

ZrO₂ may function to improve the strength of the ceramic glass, and TiO₂ may function to improve corrosion resistance of the ceramic glass. Accordingly, the ceramic glass, according to one or more embodiments of the disclosure, may secure excellent strength and corrosion resistance.

In the ceramic glass, according to one or more embodiments of the disclosure, the glass material may include Li₂O of 5 percent by weight (wt%) to 15 wt%, Al₂O₃ of 15 wt% to 25 wt%, SiO₂, and one or more impurities.

Li₂O may function to improve a hardness of the ceramic glass. Accordingly, in a case in which the Li₂O content is low, it may be difficult to secure sufficient hardness of the ceramic glass. In contrast, in a case in which the Li₂O content is excessive, manufacturing costs may rise. Accordingly, to achieve optimal benefits of Li₂O, the Li₂O content in the ceramic glass may range from 5 wt% to 15 wt%. In some examples, the Li₂O content in the ceramic glass may be controlled to range from 5 wt% to 10 wt%.

Al₂O₃ may function to improve corrosion resistance and durability of the ceramic glass. In a case in which the Al₂O₃ content is low, the corrosion resistance and durability of the ceramic glass may deteriorate. In contrast, in a case in which the Al₂O₃ content is excessive, manufacturing costs may rise. Accordingly, to achieve optimal benefits of Al₂O₃, the Al₂O₃ content in the ceramic glass may range from 15 wt% to 25 wt%. In some examples, the Al₂O₃ content in the ceramic glass may be controlled to range from 17 wt% to 22 wt%.

SiO₂ may function as a crystal nucleus generator in the ceramic glass. Accordingly, in a case in which the SiO₂ content is low, a sufficient amount of crystals may be not generated in the ceramic glass, and accordingly, reflectivity may deteriorate. In contrast, in a case in which the SiO₂ content is excessive, the hardness and durability of the ceramic glass may deteriorate.

Since unintended impurities may be inevitably mixed from a raw material or a surrounding environment during a manufacturing process, such unintended impurities may need to be considered during the manufacturing process. The disclosed percentages of the materials in the ceramic glass take these impurities into account. These impurities may already be known to anyone of the engineers involved in the manufacturing process.

In the ceramic glass, according to one or more embodiments, of the disclosure, the glass material may have a thickness of 3 mm to 5 mm, although not limited thereto. However, as understood by one of ordinary skill in the art, the thickness of the glass material may depend on a purpose and shape of the glass material.

A surface roughness value Ra of the ceramic glass may correspond to an average length between peaks and valleys of the ceramic glass. For example, referring to FIG. 1, the surface roughness value Ra may correspond to the average length between each peak (204A) and each value (204B). The surface roughness value Ra of the ceramic glass, according to one or more embodiments of the disclosure, may be 0.28 *µ*m or less. In some examples, the surface roughness value Ra of the ceramic glass is 0.1 µm or less. The surface roughness of the ceramic glass may be caused by the uneven layer formed on the upper surface. The uneven layer may be formed during a cooling operation of a ceramic glass manufacturing method. According to the embodiments of the present disclosure, by rapidly performing the cooling operation (e.g., increasing the speed of cooling), an appropriate level of crystal nucleus may be generated, and color clarity of the ceramic glass may be improved. However, by rapidly performing the cooling operation, the glass material may have a significantly rough surface. Accordingly, in one or more embodiments of the disclosure, a polishing operation may be performed after the cooling operation, thereby implementing a smooth surface having a surface roughness value Ra of 0.28 *µ*m or less. In some examples, the surface roughness may be 0.1 *µ*m or less.

According to one or more embodiments, the ceramic glass, the coating layer may include ZrO₂ of 70 wt% to 95 wt%, TiO₂, and impurities.

ZrO₂ may function to improve strength. Accordingly, in a case in which the ZrO₂ content is low, it may be difficult to secure sufficient hardness. In contrast, in a case in which the ZrO₂ content is excessive, manufacturing costs may rise. Accordingly, to achieve the optimal benefits of ZrO₂, the ZrO₂ content in the ceramic glass may range from 70 wt% to 95 wt%. In some examples, the ZrO₂ content in the ceramic glass may be controlled to range from 80 wt% to 85 wt%.

TiO₂ may function to improve corrosion resistance of the ceramic glass. Accordingly, in a case in which the TiO₂ content is low, the corrosion resistance of the ceramic glass may deteriorate. In contrast, in a case in which the TiO₂ content is excessive, the strength may deteriorate.

Since unintended impurities may be inevitably mixed from a raw material or a surrounding environment during a manufacturing process, such unintended impurities may need to be considered during the manufacturing process. The disclosed percentages of the materials in the ceramic glass take into account these impurities. These impurities may already be known to anyone of the engineers involved in the manufacturing process.

In some embodiments, the coating layer may have a thickness of 400 nm or less. In some examples, the thickness of the coating layer may be 100 nm or less. In some examples, the thickness of the coating layer may be 30 nm or less.

In a case in which the thickness of the coating layer is too small, anticontaminating functionality of the ceramic glass may deteriorate and the ceramic glass may be not easily cleaned. In contrast, in a case in which the thickness of the coating layer is too great, productivity of the ceramic glass (e.g., the time the ceramic glass may be used) may deteriorate.

In some examples, the coating layer may have a uniform thickness on at least a portion of the uneven layer or throughout the entire uneven layer. However, to further smoothen the surface of the coating layer, the coating layer may have a greater thickness at valley portions of the uneven layer than at peak portions of the uneven layer.

A surface roughness value Rz of the ceramic glass may correspond to a measure of a vertical distance from the highest peak to the lowest valley within a number of N sampling lengths, and then averaging these distances. N may be an integer greater than zero. For example, referring to FIG. 1, the surface roughness value Rz may correspond to the vertical distance between three (e.g., N=3) peaks (204A) and valleys (204B), and averaging these distances. The surface roughness value Rz of the ceramic glass, according to one or more embodiments of the disclosure, may be 1.48 *µ*m or less. In some examples, the surface roughness value Rz of the ceramic glass may be 1.2 *µ*m or less. Since one or more embodiments of the present disclosure perform the cooling operation rapidly, the surface of the glass material may be significantly rough. Accordingly, by performing a polishing operation after the cooling operation, the embodiments of the present disclosure may advantageously implement a smooth surface having a surface roughness value Rz of 1.48 *µ*m or less. In some examples, the surface roughness value Rz may be 1.2 *µ*m or less. In some examples, the surface roughness value Rz may be 0.8 *µ*m or less.

By forming the coating layer, a Vickers hardness of the ceramic glass, according to one or more embodiments of the disclosure, may range from 920 to 1000.

By controlling ingredients of the glass material, a heat shock temperature of the ceramic glass, according to one or more embodiments of the disclosure, may be 500°C or more. In some examples, a heat shock temperature of the ceramic glass may be 525°C or more. In some examples, a heat shock temperature of the ceramic glass may range from 525 °C to 575 °C. A heat resistance temperature of the ceramic glass may be 800°C or more. In some examples, the heat resistance temperature of the ceramic glass may be 825°C or more. In some examples, the heat resistance temperature of the ceramic glass may range from 825 °C to 875 °C. That is, the ceramic glass, according to one or more embodiments of the present disclosure, may implement sufficient heat resistance as a cooktop glass material.

The ceramic glass, according to one or more embodiments of the disclosure, may further include a heating area guide for displaying a center of a heating area on an upper side of the glass material. The heating area guide may be formed by printing glass ink on the upper side of the glass material. The heating area guide may be formed in a shape of a straight line or a cross to display the center of the heating area. The heating area guide may be formed into any other suitable shape known to one of ordinary skill in the art.

A ceramic glass manufacturing method, according to one or more embodiments of the disclosure, will be described.

The ceramic glass manufacturing method, according to one or more embodiments of the disclosure, may include operations: producing a ceramic glass precursor; generating crystals by heating the ceramic glass precursor; cooling a ceramic glass including the crystals; molding the cooled ceramic glass; and polishing the molded ceramic glass.

Also, the ceramic glass manufacturing method may further include an operation of coating the polished ceramic glass.

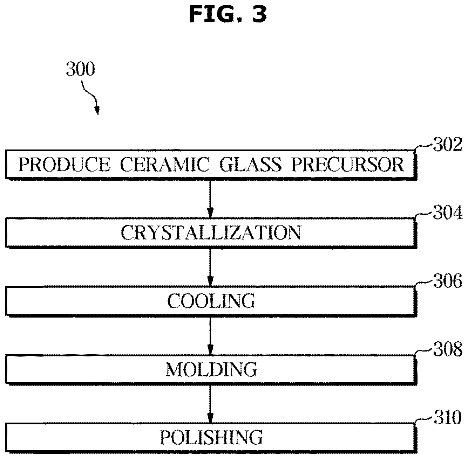

FIG. 3 is a flowchart illustrating a ceramic glass manufacturing method, according to one or more embodiments.

Referring to FIG. 3, the ceramic glass manufacturing method (300), according to one or more embodiments of the disclosure, may include a series of operations of: producing a ceramic glass precursor (302), generating crystals (304); cooling (306); molding (308); and polishing (310).

First, in operation (302), ceramic glass powder may be prepared, and the ceramic glass powder may be melt at 1400 °C to 1600 °C and cooled at cooling speed of 40 °C/min or less to produce a ceramic glass precursor.

The process may proceed to operation (304), where a crystal generating operation for generating crystals in a ceramic glass may be performed. The crystal generating operation may include, for example, a first heating operation of maintaining the ceramic glass precursor at 600 °C to 800 °C for 10 minutes to 20 minutes, and a second heating operation of maintaining the ceramic glass precursor at 800 °C to 1000 °C for 20 minutes to 30 minutes.

Through the first heating operation, a nucleus for crystallization may be generated in the ceramic glass, and in the second heating operation, crystallization may be performed based on the nucleus.

In a case in which the crystal generating operation is performed at too low temperature or for too short a time, a sufficient amount of crystals may be not generated, which deteriorates color clarity and reflectivity. In contrast, in a case in which the crystal generating operation is performed at too high temperature or for too long a time, productivity may be reduced. Accordingly, temperature and time for the crystal generating operation may need to be set to appropriate temperature and time.

The process may proceed to operation (306) to perform a cooling operation. The cooling operation may be performed at cooling speed of 20 °C/min or more. In some examples, the cooling operation is performed until the ceramic glass reaches room temperature.

Generally, as the crystal generating operation is performed for a longer time and the cooling operation is performed for a shorter time, color clarity of the ceramic glass may be improved, while more protrusions and depressions may be formed on the surface of the ceramic glass, which hinders easy cleaning of the ceramic glass. Accordingly, in one or more embodiments, the cooling operation may be performed for a long time. For example, the cooling operation may be performed until the ceramic glass reaches room temperature.

However, the ceramic glass manufacturing method, according to one or more embodiments, may improve color clarity by rapidly performing the cooling operation at a high cooling speed of 20 °C/min or more, and implement easy cleaning through the polishing operation.

The process may proceed to operation (308) where the molding operation for molding the cooled ceramic glass may be performed. In the molding operation, cutting and edge processing of the ceramic glass for a desired shape may be performed.

The process may proceed to operation (310) where a polishing operation for polishing the molded ceramic glass may be performed.

In the polishing operation, an abrasive may be applied on a polishing pad (Softbuff), and then, a surface of the molded ceramic glass may be polished. By performing the polishing operation, the surface of the ceramic glass may be further smoothened to maximize easy cleaning.

Thereafter, a coating operation for forming a coating layer on the polished surface of the ceramic glass may be additionally performed.

The coating operation may be performed by applying a coating solution on the entire upper surface of the ceramic glass and drying the coating solution at 600 °C to 800 °C for 5 minutes to 15 minutes.

In a case in which a drying temperature is too low or a drying time is too short, a non-uniform coating layer may be formed. In contrast, in a case in which drying temperature is too high or drying time is too long, cracks may be generated in a surface of a coating layer.

A cooktop according to one or more embodiments of the disclosure will be described.

A cooktop, according to one or more embodiments of the disclosure, may include: a cooktop body; and a first glass provided on an upper side of the cooktop body, where the first glass may include a ceramic glass. The ceramic glass may include a glass material, where an uneven layer is formed on an upper surface of the glass material. A color difference meter value L of the ceramic glass may range from 85 to 100. In some examples, the color difference meter value L may range from 90 to 100.

The cooktop body, according to one or more embodiments of the disclosure, may include a heater. The cooktop may include: a second glass positioned on a same line as the first glass; a coupling device configured to detachably couple the second glass to the first glass; a circuit board positioned below the second glass; and a coil resting plate positioned below the heater to rest the heater thereon.

The glass material may include Li₂O of 5 wt% to 15 wt%, Al₂O₃ of 15 wt% to 25 wt%, SiO₂, and impurities.

The ceramic glass of the cooktop, according to one or more embodiments of the disclosure, may have a surface roughness value Rz of the uneven layer 1.48 *µ*m or less. In some examples, the surface roughness value Rz of the uneven layer may be 1.2 *µ*m or less through a polishing operation. In some examples, the surface roughness value Rz may be 0.8 *µ*m or less.

A reason of limiting a surface roughness value (e.g., Ra or Rz) of the glass material has been described above, and hereinafter, the cooktop will be described in more detail.

The cooktop, according to one or more embodiments of the disclosure, may include: the cooktop body; and the first glass provided on the upper side of the cooktop body, where the first glass may include a ceramic glass.

The cooktop body may include the heater, and the cooktop may include: a second glass positioned on a same line as the first glass; a coupling device configured to detachably couple the second glass to the first glass; a circuit board positioned below the second glass; and a coil resting plate positioned below the heater to rest the heater thereon.

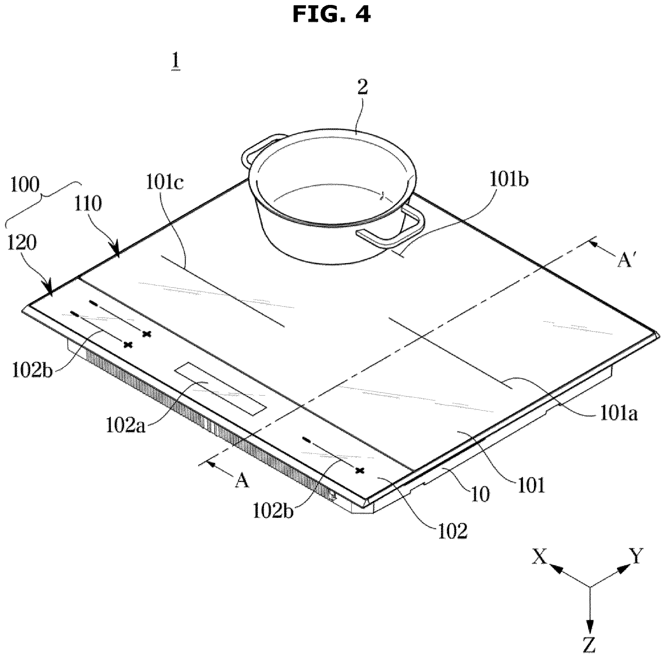

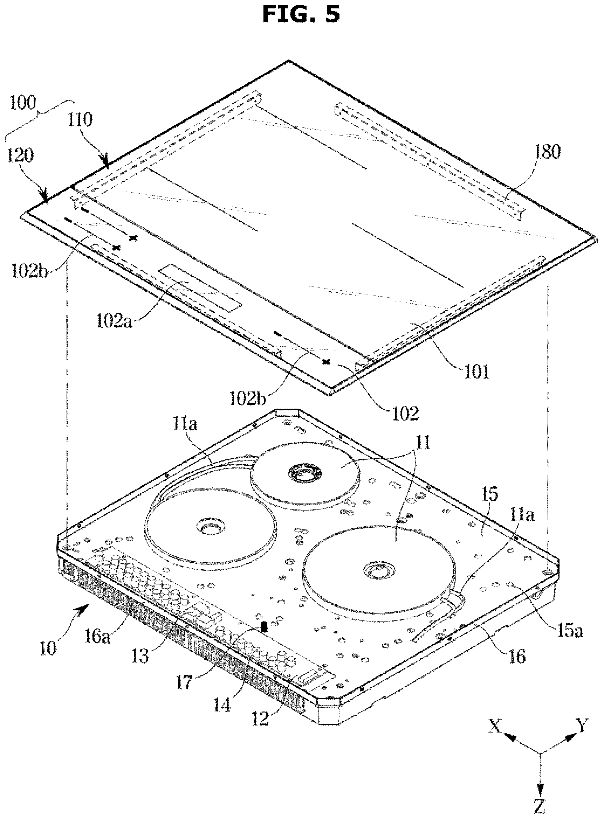

FIG. 4 shows a cooktop, according to one or more embodiments of the disclosure, and FIG. 5 is an exploded perspective view of a cooktop, according to one or more embodiments of the disclosure.

Referring to FIGS. 4 and 5, a cooktop 1, according to one or more embodiments of the disclosure, may include a cooktop body 10; and a first glass 110 provided on an upper side of the cooktop body 10.

The cooktop 1, according to one or more embodiments of the disclosure, may include a heater (e.g., induction heating coil 11), a second glass 120, a coupling device 200, a circuit board 12, and a coil resting plate 15.

The cooktop body 10 may form an appearance of a cooking apparatus 1. The induction heating coil 11 may be accommodated inside the cooktop body 10 and generate a magnetic field to inductively heat a cooking vessel 2. The induction heating coil 11 may be electrically connected with a main board provided inside the main body 10 through a wire 11a.

A glass 100 may include the first glass 110 forming a first area 101, and the second glass 120 forming a second area 102.

The circuit board 12 may be positioned below the second glass 120. The circuit board 12 may include a display portion 13 and a touch portion 14. The display portion 13 may be positioned below a display 102a formed in the second area 102. The display portion 13 may display information about whether the cooking vessel 2 is heated by the induction heating coil 11. Accordingly, a user may identify whether the cooking vessel 2 is heated based on information displayed in the display 102a. The touch portion 14 may be positioned below one or more input mechanisms 102b formed in the second area 102. The touch portion 14 may receive a touch signal from the one or more input mechanisms 102b. For example, the touch portion 14 may receive an input by a capacitive touch method, although not limited thereto. However, the touch portion 14 may receive an input by a resistive touch method, although not limited thereto. A user may adjust current flowing through the induction heating coil 11 through the one or more input mechanisms 102b to control a heating level of the cooking vessel 2.

The induction heating coil 11 may be rested on the coil resting plate 15. In the coil resting plate 15, a coil resting hole 15a for resting the induction heating coil 11 may be provided. A plurality of coil resting holes 15a may be provided.

The cooktop body 10 may further include a first frame 16 for supporting the glass 100. The first frame 16 may support the glass 100 thereon. The first frame 16 may extend upward from four sides of the coil resting plate 15. The first frame 16 may enable the glass 100 to be rested on and supported by the cooktop body 10.

The first glass 110 may include heating area guides 101a, 101b, and 101c, and support the cooking vessel 2. The cooking vessel 2 may be positioned on the first area 101.

The second glass 120 may include the second area 102, and the second area 102 may include the display 102a and the one or more input mechanisms 102b. The display 102a may be formed in the second area 102 to display various information related to the cooking vessel 1, and the one or more input mechanisms 102b may be formed in the second area 102 to receive a control command from a user. The one or more input mechanisms 102 may include one or more buttons.

The second glass 120 may be physically separated from the first glass 110, and detachably coupled to the first glass 110 by the coupling device 200. The second glass 120 may be detachably coupled to the first glass 110 by the coupling device 200.

The first glass 110 may form the first area 101, and the cooking vessel 2 may be positioned on the first area 101. The cooking vessel 2 positioned on the first glass 110 may be inductively heated by a magnetic field generated by the induction heating coil 15.

The second glass 120 may form the second area 102 separated from the first area 101, and cooking information of the cooking vessel 1, including temperature of the cooking vessel 2, elapsed time for cooking, and/or date/time, or any other information relevant to the operation of the cooktop 1 may be displayed through the display 102a of the second area 102.

The second area 102 may include the one or more input mechanisms 102b for receiving a control command from a user to turn on/off the cooking apparatus 1 or control temperature of the cooking vessel 2. The one or more input mechanisms 102b may receive an input by a user's touch. In some examples, the second area 102 may include communication circuitry configured to receive a command wirelessly from a remote device (e.g., smart phone, remote control, etc.).

The second glass 120 may be a tempered glass. The first glass 110 and the second glass 120 may be formed with different materials. For example, the first glass 110 may be a ceramic glass having excellent heat resistance, and the second glass 120 may have a characteristic capable of transferring a touch signal generated by a touch operation to the circuit board 12.

The first glass 110 and the second glass 120 may be detachably coupled to each other by the coupling device 200. For example, the second glass 120 may be detachably coupled to the first glass 110 by the coupling device 200. The second glass 120 may be coupled to a front portion of the first glass 110. The second glass 120 may cover one side of the first glass 110 upon coupling with the first glass 110.

For a repair of the circuit board 12 positioned in the second area 102 upon a failure of the circuit board 12, etc., the second glass 120 corresponding to the second area 102 may be separated and replaced, which advantageously facilitates a follow-up service for easy repair and cleaning.

Hereinafter, for easy understanding of the disclosure, one or more embodiments and a comparative example will be described. However, the following description merely correspond to one or more examples about content and effects of the disclosure, and the scope of rights and effects of the disclosure are not limited to the following description.

### {Embodiment}

### <Surface Roughness Measurement Test>

A surface roughness measurement test was performed at room temperature (25 °C) by a surface roughness measuring device by measuring an amount of an up-down movement of a stylus moving vertically to a surface of a measured test piece.

Table 1 shows surface roughness of an existing ceramic glass (comparative example) that is not coated and a coated ceramic glass, according to one or more embodiments of the disclosure.

**[Table 1]**

| Surface Roughness | Comparative Example (*µ*m) | Embodiment (*µ*m) |
|---|---|---|
| Ra | 0.29 | 0.17 |
| Rq | 0.36 | 0.22 |
| Rz | 1.49 | 1.17 |

Referring to Table 1, surface roughness of one or more embodiments were measured to be lower than a surface roughness of comparative example. That is, it was confirmed that because the coated ceramic glass, according to one or more embodiments of the disclosure, implements a smoother surface, thereby resulting in easy cleaning and maintenance.

### <Vickers Hardness Measurement Test>

A Vickers hardness measurement was performed by a method of obtaining hardness by pressing a test piece with a weight of 0.05 kgf by using a pyramid-shaped particle having a diamond-shaped square cone, and measuring a diagonal line of a pyramid-shaped concave portion made in the test piece.

Vickers hardness of the existing ceramic glass (comparative example) that is not coated was measured to be Hv 860, and the Vickers hardness of the coated ceramic glass, according to one or more embodiments of the disclosure, was measured to be Hv 920.

That is, it was confirmed that the coated ceramic glass, according to one or more embodiments of the disclosure, has improved hardness by forming a coating layer.

### <Test of Cleaning Kimchi pollution>

A test of cleaning Kimchi pollution was performed by a method of applying a head of nepa cabbage produced by CJ CheilJedang Corporation on an entire upper plate of the cooktop, according to one or more embodiments of the disclosure, then performing a cycle consisting of 30 minutes heating and 30 minutes resting each day for six days, and cleaning the cooktop with a cooktop detergent.

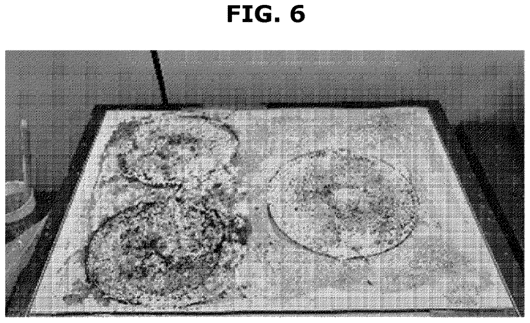

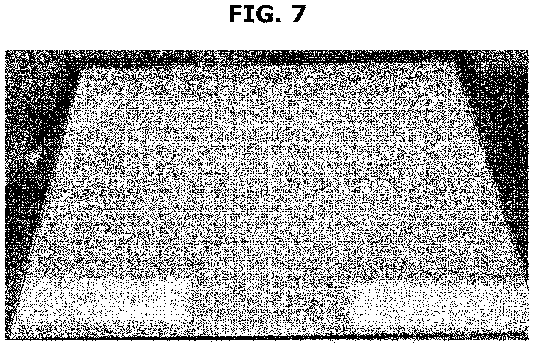

FIG. 6 is a picture obtained by photographing a cooktop, according to one or more embodiments of the disclosure, after a kimchi pollution source is applied on an upper plate of the cooktop, and FIG. 7 is a picture obtained by photographing a cooktop, according to one or more embodiments of the disclosure, after a kimchi pollution source is applied on an upper plate of the cooktop and then cleaned.

It was confirmed from FIGS. 6 and 7 that the cooktop to which a ceramic glass including a coating layer is applied, according to one or more embodiments of the disclosure, is easily cleaned.

### <Cleaning Test after Cooking Oil Heating>

A cleaning test after cooking oil heating was performed by applying cooking oil of 3g on the entire upper plate of the cooktop, according to one or more embodiments of the disclosure, then leaving the upper plate of the cooktop at different temperature for 30 minutes, and measuring changes of surface color difference meter values ΔE.

Table 2 shows color difference meter values ΔE of the upper plate of the cooktop according to a temperature, before and after a cleaning test, after cooking oil heating. Generally, it may be identified that a color difference meter value ΔE of 1.0 or less secures easy cleaning.

**[Table 2]**

| Temperature (°C) | Color Difference Meter Value |
|---|---|
| 220 | 0.07 |
| 250 | 0.16 |
| 280 | 0.59 |
| 300 | 0.08 |
| 325 | 0.14 |
| 350 | 0.73 |

Referring to Table 2, as understood by one of ordinary skill in the art, because color difference meter values ΔE are smaller than or equal to 1.0 at all temperature ranges, cleaning after cooking oil heating is easy.

### <Measurement Test by Color Difference Meter>

A measurement test by a color difference meter was performed by a method of comparing a color difference value of a cooktop (comparative example) to which the non-coated ceramic glass is applied with a color difference value of the cooktop to which the coated ceramic glass, according to one or more embodiments, of the disclosure is applied.

In some examples, a L*a*b* color difference meter (e.g., SpectrophotoMeter) was used.

In the comparative example, L, a, and b were measured to be 84.8, -0.5, and -0.5, respectively, and in the one or more embodiments of the disclosure, L, a, and b were measured to be 95, 1.0, and 2.0, respectively.

That is, it was confirmed that upon application of the coated ceramic glass, according to one or more embodiments of the disclosure, white color clarity is increased, and a warm white ceramic glass with high aesthetic appeal is implemented.

### <Heat Resistance Test>

A heat resistance test was performed by a method of measuring heat shock temperature and heat resistance temperature.

Heat shock temperature was measured based on the UL 858 standard.

Average heat shock temperature of a ceramic glass manufactured, according to one or more embodiments of the disclosure, was measured to be 550 °C.

Heat resistance temperature is temperature at which there is no damage for a long time. By putting a ceramic glass test piece manufactured, according to one or more embodiments of the disclosure, in a heat resistance test chamber heated up to preset temperature, and then leaving the ceramic glass test piece for 100 hours, temperature at which the glass material is damaged was measured. Whether there is a damage was identified depending on whether a scratch is visible to the naked eye. Heat resistance temperature was measured three times, and then represented by an average value.

Average heat resistance temperature of the ceramic glass manufactured, according to one or more embodiments of the disclosure, was measured to be 850 °C.

Accordingly, as understood by one of ordinary skill in the art, the ceramic glass according to one or more embodiments of the disclosure has appropriate heat resistance as a ceramic glass for cooktop.

### [Industrial applicabilty]

According to one or more embodiments of the present disclosure, the ceramic glass and the cooktop applied thereto can be provided that improves color clarity by increasing the time for performing the crystal generation step, and by speeding up the cooling step, and improves cleaning by performing a polishing process.

## Claims

1. A ceramic glass for cooktop comprising:
a glass material having an uneven layer formed on an upper surface of the glass material,
wherein a color difference meter value L of the ceramic glass ranges from 90 to 100,
the glass material comprises Li₂O, Al₂O₃, and SiO₂,
a heat shock temperature of the ceramic glass ranges from 525 °C to 575 °C,
the ceramic glass implements a surface roughness Ra of 0.1 *µ*m or less and a surface roughness Rz of 0.8 *µ*m or less through a polishing operation.

2. The ceramic glass of claim 1, wherein a heat resistance temperature of the ceramic glass ranges from 825 °C to 875 °C.

3. The ceramic glass of claim 1, further comprising a coating layer provided on an entirety of the uneven layer, wherein the coating layer comprises ZrO₂ and TiO₂.

4. The ceramic glass of claim 1, wherein the glass material comprises Li₂O of 5 percent by weight (wt%) to 15 wt%, Al₂O₃ of 15 wt% to 25 wt%, and SiO₂.

5. The ceramic glass of claim 1, wherein a thickness of the glass material ranges from 3 mm to 5 mm.

6. The ceramic glass of claim 3, wherein the coating layer comprises ZrO₂ of 70 percent by weight (wt%) to 95 wt%, and TiO₂.

7. The ceramic glass of claim 3, wherein a thickness of the coating layer is 30 nm or less.

8. The ceramic glass of claim 3, wherein Vickers hardness (Hv) of the ceramic glass ranges from 920 to 1000.

9. The ceramic glass of claim 1, further comprising a heating area guide configured to display a center of a heating area on an upper side of the glass material.

10. A ceramic glass for a cooktop comprising:
a glass material having an uneven layer formed on an upper surface of the glass material,
wherein a color difference meter value L of the ceramic glass ranges from 90 to 100,
the glass material comprises Li₂O, Al₂O₃, and SiO₂,
the ceramic glass implements a surface roughness Ra of 0.1 *µ*m or less and a surface roughness Rz of 0.8 *µ*m or less through a polishing operation.

11. A method for manufacturing a ceramic glass for cooktop, the method comprising:
producing a ceramic glass precursor;
generating crystals by heating the ceramic glass precursor;
cooling a ceramic glass including the crystals;
molding the cooled ceramic glass; and
polishing the molded ceramic glass.

12. The method of claim 11, further comprising coating the polished ceramic glass.

13. The method of claim 11, wherein the producing the ceramic glass precursor comprises melting ceramic glass powder at 1400 °C to 1600 °C and, after the melting is performed, cooling the ceramic glass at a cooling speed of 40 °C/min or less up to room temperature.

14. The method of claim 11, wherein the generating the crystals comprises a first heating operation of maintaining the ceramic glass precursor at 600 °C to 800 °C for 10 minutes to 20 minutes, and a second heating operation of maintaining the ceramic glass precursor at 800 °C to 1000 °C for 20 minutes to 30 minutes.

15. The method of claim 11, wherein the cooling operation comprises cooling the ceramic glass including the crystals at cooling speed of 20 °C/min until the ceramic glass reaches room temperature.

16. The method of claim 12, wherein the coating the polished ceramic glass comprises applying a coating solution on an upper surface of the ceramic glass, and after the coating solution is applied, drying the coating solution at 600 °C to 800 °C for 5 minutes to 15 minutes.

17. A cooktop comprising:
a cooktop body;
a first glass provided on an upper side of the cooktop body;
a second glass positioned on a same line as the first glass;
a coupling device configured to detachably couple the second glass to the first glass;
a circuit board positioned below the second glass; and
a coil resting plate positioned below a heater, wherein the heater is rested on the coil resting plate,
wherein the cooktop body comprises the heater,
the first glass comprises a ceramic glass,
the ceramic glass comprises a glass material,
an uneven layer is formed on an upper surface of the glass material,
a color difference meter value L of the ceramic glass ranges from 90 to 100,
a heat shock temperature of the ceramic glass ranges from 525 °C to 575 °C,
the ceramic glass implements a surface roughness Ra of 0.1 *µ*m or less and a surface roughness Rz of 0.8 *µ*m or less through a polishing operation,
the glass material comprises LiO₂, Al₂O₃, and SiO₂.

18. The cooktop of claim 17, wherein heat resistance temperature of the ceramic glass ranges from 825 °C to 875 °C.

19. The cooktop of claim 17, wherein the glass material includes Li₂O of 5 percent by weight (wt%) to 15 wt%, Al₂O₃ of 15 wt% to 25 wt%, SiO₂.

20. A cooktop comprising:
a cooktop body;
a first glass provided on an upper side of the cooktop body;
a second glass positioned on a same line as the first glass;
a coupling device configured to detachably couple the second glass to the first glass;
a circuit board positioned below the second glass; and
a coil resting plate positioned below a heater, wherein the heater is rested on the coil resting plate,
wherein the cooktop body includes the heater,
the first glass includes a ceramic glass,
the ceramic glass includes a glass material,
an uneven layer is formed on an upper surface of the ceramic glass,
a color difference meter value L of the ceramic glass ranges from 90 to 100,
the ceramic glass implements a surface roughness Ra of 0.1 *µ*m or less and a surface roughness Rz of 0.8 *µ*m or less through a polishing operation,
the glass material comprises LiO₂, Al₂O₃, and SiO₂.
